# EUROPEAN PATENT SPECIFICATION

(11) **EP 4 456 311 B1**
(45) Date of publication and mention of the grant of the patent: **01.04.2026**
(21) Application number: 23760343.6
(22) Date of filing: 20.02.2023
(51) Int. Cl.: H01M 50/516, H01M 50/502, H01M 50/557, B23K 37/04, B23K 101/36, B23K 101/38

(54) **ELECTRODE LEAD ALIGNING AND MASKING DEVICE**
VORRICHTUNG ZUR MASKIERUNG UND AUSRICHTUNG VON ELEKTRODENLEITUNGEN
DISPOSITIF DE MASQUAGE ET D'ALIGNEMENT DE FIL D'ÉLECTRODE

(30) Priority: 22.02.2022 KR 20220022936
(43) Date of publication of application: 30.10.2024
(73) Proprietor: LG Energy Solution, Ltd., Seoul 07335 (KR)
(72) Inventor: KIM, Tae Wook, Daejeon 34122 (KR)
(74) Representative: Plasseraud IP
(86) International application number: PCT/KR2023/002396
(87) International publication number: WO 2023/163469

(56) References cited:
- JP-A- 2015 056 342
- KR-A- 20160 109 035
- KR-A- 20180 129 170
- KR-A- 20190 029 037
- KR-A- 20210 023 289
- KR-A- 20210 087 362
- US-A1- 2020 365 863
- US-B2- 11 020 842

## Description

### [Technical Field]

This application claims the benefit of priority to Korean Patent Application No. 10-2022-0022936, filed Feb. 22, 2022.

The present invention relates to an electrode lead aligning and masking device, and more particularly, to an electrode lead aligning and masking device capable of aligning an electrode lead bent on a bus bar at a correct position, significantly reducing a welding defect rate, and preventing damage to an electrode rib.

### [Background Art]

In general, a secondary battery includes a positive electrode, a negative electrode, and an electrolyte, and generate electric energy by using a chemical reaction. The use of secondary batteries is gradually increasing due to the advantage of being able to charge and discharge. Among these secondary batteries, lithium secondary batteries have a high energy density per unit weight, and thus are widely used as power sources for electronic communication devices, driving sources for high-power hybrid vehicles and electric vehicles, or the like.

In terms of the shape of the secondary batteries, there is a growing demand for prismatic-type secondary batteries and pouch-type secondary batteries that can be applied to products such as mobile phones and the like due to their small thickness. In terms of the material of the secondary batteries, there is a growing demand for lithium secondary batteries, such as lithium-ion batteries and lithium-ion polymer batteries, which have high energy density, discharge voltage, and output stability.

A plurality of battery cells are stacked inside a battery case of the secondary battery. Electrode tabs are formed to protrude from each of the plurality of battery cells, and an electrode lead is welded to each of the electrode tabs. A negative electrode lead and a positive electrode lead are bent to overlap a bus bar by a bending tool in a bending process. In a welding process, which is a subsequent process of the bending process, the bent negative and positive electrode leads are welded to the bus bar by a welding tool in an overlapped state .

However, conventionally, when the welding process is performed after the electrode lead bending process, the bent electrode leads are welded to the bus bar in an unaligned state. Accordingly, even when a plurality of electrode leads are unified in length, a welding length of the electrode lead varies, and thus a welding defect rate may be increased.

**In** addition, when a pair of electrode leads are bent in a state in which the pair of electrode leads are spread outward in a width direction of the bus bar, the length at which the pair of electrode leads are overlapped is reduced. **In** this case, when the overlapping portion is welded while being pressed with a masking jig, an actual welding section becomes shorter than a design welding section, and thus, a bonding strength of the welding portion is significantly reduced.

**In** addition, when a pair of electrode leads are bent in a state in which the pair of electrode leads are gathered toward both side surfaces in the width direction of the bus bar, the length at which the pair of electrode leads are overlapped is excessively increased. **In** this case, end portions of the pair of electrode leads overlap a portion bent to be rounded, and thus the overlapping portion of the pair of electrode leads may be locally lifted or a gap may widen. Accordingly, the bonding strength of the welding portion may be reduced. **In** addition, welding sparks or spatters may splash in the vicinity, and thus a welding defect rate may be increased.

**In** addition, since the welding length of the pair of electrode leads in each bus bar may be different, an actual welding length deviates from the required design dimension, and thus a welding defect rate may be increased.

The background art of the present invention is disclosed in Korean Patent Publication No. 2019-0097614 (published on August 21, 2019, title of the invention: Jig for spot welding).

US 2020/0365863 A1 discloses an an automatic pressing jig apparatus for closely contacting a lead assembly and a bus bar provided in a battery module to each other . The automatic pressing jig apparatus comprises a plurality of contacting units configured to simultaneously press each of a plurality of bus bars provided in a battery module and press an end of a lead assembly from a top of the plurality of bus bars to prevent the lead assembly from protruding from a surface of the plurality of bus bars, a pair of pressing units connected to the plurality of contacting units and configured to adjust a pressing force of the plurality of contacting units with respect to the plurality of bus bars and a support frame supporting the pair of pressing units. KR 20160109035 A discloses a jig for laser welding and laser welding method using the same. US 11020842 B2 discloses a jig assembly for laser welding which includes a jig body having a first penetration portion through which laser light for welding is capable of passing, a contact member connected to the jig body to contact a welding target, the contact member having a second penetration portion through which the laser light passing through the first penetration portion is capable of passing toward the welding target, a tilting unit having a hinge structure to connect the jig body and the contact member to each other and an elastic member interposed between the jig body and the contact member to apply an elastic force to provide close contact between the contact member and the welding target.

### [Disclosure]

### [Technical Solution]

The present invention has been made to solve the above problems, and is directed to providing an electrode lead aligning and masking device capable of aligning an electrode lead bent on a bus bar at a correct position and significantly reducing a welding defect rate.

The present invention is also directed to providing an electrode lead aligning and masking device allowing an actual welding length of an electrode lead to be matched with a design welding length thereof.

The present invention is also directed to providing an electrode lead aligning and masking device capable of preventing electrode leads from spreading outward in a width direction of a bus bar and thus preventing a bonding area and a bonding strength of a welding portion from being reduced.

The present invention is also directed to providing an electrode lead aligning and masking device capable of preventing an overlapping portion of a pair of electrode leads from being locally lifted or preventing a gap from widening.

The present invention is also directed to providing an electrode lead aligning and masking device capable of preventing an electrode lead and an aligning jig from being damaged.

### [Technical Solution]

One aspect of the present invention provides an electrode lead aligning and masking device as laid out in appended claim 1.

The pair of aligning jigs may be coupled to both sides of the masking jig in a width direction.

The aligning jig may gather the electrode lead toward the bus bar while being inserted into the slot on an outer side of the electrode lead.

The aligning jig may include an alignment body portion facing each of both sides of the masking jig, and an alignment rib extending from the alignment body portion, formed to be thinner than a thickness of the alignment body portion, and configured to align the electrode lead while being inserted into the slot.

An alignment taper portion may be formed on an inner side of the alignment rib in a thickness direction to gather the electrode lead toward the bus bar.

A stepped portion may be formed on a lower side of the alignment body portion to be spaced apart from a bent portion of the electrode lead, and a pressing surface portion of the masking jig may be disposed at a lower position than the stepped portion.

The aligning jig may be formed in a shape of a rectangular panel.

The masking jig may be formed in a shape of a rectangular cylinder parallel to the bus bar in a longitudinal direction, and the welding space portion may be formed parallel to the bus bar in the longitudinal direction.

The masking jig may press the electrode lead to the bus bar.

The electrode lead aligning and masking device comprises at least two elastic members respectively installed on both sides of the masking jig to elastically support the pair of aligning jigs.

The masking jig includes a masking body portion having a welding space portion passing therethrough in a vertical direction, and a sliding guide portion disposed on each of both sides of the masking body portion and formed with a sliding groove portion to which the aligning jig is slidably coupled.

The aligning jig may include an alignment body portion facing each of both sides of the masking jig, an alignment rib extending downward from the alignment body portion, formed to be thinner than a thickness of the alignment body portion, and configured align the electrode lead by being inserted into the slot, and a slider extending upward from the alignment body portion and slidably coupled to the sliding groove portion.

The alignment rib may gather the electrode lead toward the bus bar while being inserted into the slot on an outer side of the electrode lead.

An alignment taper portion may be formed on an inner side of the alignment rib in a thickness direction to gather the electrode lead toward the bus bar.

A thickness of the slider may be formed smaller than the thickness of the alignment body portion.

A movement limiting portion configured to limit a movement distance of the aligning jig by being caught on a lower end portion of the sliding guide portion may be formed on an upper side of the alignment body portion.

The elastic member may be supported by an upper end portion of the alignment body portion and an upper end portion of the sliding groove portion.

The elastic member may be disposed on each of both sides of the alignment body portion in a longitudinal direction.

A stepped portion may be formed on a lower side of the alignment body portion to be spaced apart from a bent portion of the electrode lead, and a pressing surface portion of the masking jig may be disposed at a lower position than the stepped portion.

### [Advantageous Effects]

According to the present invention, since a pair of aligning jigs align positions of bent electrode leads, and a welding tool welds the electrode leads while a masking jig presses the bent electrode leads, the bent electrode leads can be welded to a correct position of a bus bar.

According to the present invention, since the electrode leads are welded to the correct position of the bus bar, an actual welding length of the electrode lead can be matched with a design welding length. In addition, a welding length of the electrode lead in each bus bar can be uniform.

According to the present invention, electrode leads are welded in a state in which the electrode leads are gathered on a bus bar, so that it is possible to prevent a bonding area and a bonding strength of a welding portion from being reduced.

According to the present invention, since an end portion of the bent electrode lead does not overlap a bent portion of the opposite electrode lead, which is bent to be rounded, it is possible to prevent an overlapping portion of the pair of electrode leads from being locally lifted or prevent a gap from widening. Accordingly, a bonding strength of the welding portion can be increased.

According to the present invention, an aligning jig is movably coupled to a masking jig and is elastically supported by an elastic member, so that an impact between the aligning jig and the electrode lead can be buffered. Accordingly, damage to the aligning jig and the electrode lead can be prevented.

In addition to the above-described effects, specific effects of the present invention will be described together with the following detailed description for implementing the present invention.

### [Description of Drawings]

FIG. 1 is a plan view schematically illustrating a secondary battery module.
FIG. 2 is a cross-sectional view schematically illustrating a state in which an electrode lead aligning and masking device is disposed on an upper side of a bus bar in the secondary battery module.
FIG. 3 is a perspective view schematically illustrating an electrode lead aligning and masking device not being part of the present invention.
FIG. 4 is an exploded perspective view schematically illustrating the electrode lead aligning and masking device of FIG. 3.
FIG. 5 is a front view schematically illustrating the electrode lead aligning and masking device of FIG. 3.
FIG. 6 is a view schematically illustrating a state in which the electrode lead aligning and masking device of FIG. 3 is located on an upper side of an electrode lead.
FIG. 7 is a view schematically illustrating a state in which an alignment jig of the electrode lead aligning and masking device of FIG. 3 is inserted into a slot to align the electrode lead.
FIG. 8 is an exploded perspective view schematically illustrating an electrode lead aligning and masking device according to the invention.
FIG. 9 is a perspective view schematically illustrating the electrode lead aligning and masking device of FIG. 8.
FIG. 10 is a front view schematically illustrating the electrode lead aligning and masking device of FIG. 8.
FIG. 11 is a cross-sectional view schematically illustrating the electrode lead aligning and masking device of FIG. 10 along line 11-11.
FIG. 12 is a cross-sectional view schematically illustrating the electrode lead aligning and masking device of FIG. 11 along line 12-12.
FIG. 13 is a cross-sectional view schematically illustrating the electrode lead aligning and masking device of FIG. 11 along line 13-13.
FIG. 14 is a cross-sectional view schematically illustrating a state in which the electrode lead of a battery cell is inserted into a slot of the bus bar in the secondary battery module.
FIG. 15 is a cross-sectional view schematically illustrating a state in which the electrode lead of the battery cell is bent on the bus bar in the secondary battery module.
FIG. 16 is a cross-sectional view schematically illustrating a state in which the aligning and masking device of the invention is located on an upper side of the bus bar.
FIG. 17 is a cross-sectional view schematically illustrating a state in which an aligning jig of the aligning and masking device of the invention is inserted into the slot between the bus bars.
FIG. 18 is a cross-sectional view schematically illustrating a state in which a stepped portion of the aligning jig the aligning and masking device of the invention presses a bent portion of the electrode lead.
FIG. 19 is a cross-sectional view schematically illustrating a state in which a pressing surface portion of a masking jig of the aligning and masking device of the invention presses the electrode lead.
FIG. 20 is a view schematically illustrating a state in which the electrode lead is welded to the bus bar via a welding space portion of the masking jig.

1: secondary battery module
10: case
20: bus bar frame
21: bus bar
23: slot
30: battery cell
31: electrode tab
31a: first electrode tab
31b: second electrode tab
33: electrode lead
33a: first electrode lead
33b: second electrode lead
34: bent portion
100: electrode lead aligning and masking device
110: aligning jig
111: alignment body portion
112: movement limiting portion
113: alignment rib
114: alignment taper portion
115: stepped portion
116: slider
120: masking jig
121: welding space portion
122: masking body portion
123: pressing surface portion
125: sliding guide portion
126: sliding groove portion
130: elastic member

### [Modes of the Invention]

Hereinafter, exemplary embodiments of the present invention will be described with reference to the accompanying drawings in detail.

The present invention is not limited to the embodiments disclosed below, but will be variously changed and implemented in various different forms. The present embodiments are provided so that the present invention will be thorough and complete, and also to provide a more complete understanding of the scope of the present invention to those of ordinary skill in the art. Accordingly, it should be understood that the present invention is not limited to the embodiments disclosed below, but the configuration of any one embodiment and the configuration of another embodiment can be substituted or added, and the present invention includes all alterations, equivalents, and alternatives that are included in the technical scope of the present invention, as defined by the appended claims.

It should be understood that the accompanying drawings are provided only to allow those skilled in the art to easily understand the embodiments disclosed in the present specification, and the present specification is not limited by the accompanying drawings, and includes all alterations, equivalents, and alternatives that are included in the technical scope of the present invention, as defined by the appended claims. In the drawings, sizes or thicknesses of components may be exaggerated, increased, or decreased for convenience of understanding, but the protection scope of the present invention should not be restrictively construed.

The terms used in the present specification are used only for the purpose of describing particular examples or embodiments and are not intended to limit the present invention. In addition, singular expressions include plural expressions unless clearly described as different meanings in the context. In the specification, the terms "comprises," "comprising," "includes," "including," "containing," "has," "having", and other variations thereof are inclusive and therefore specify the presence of features, integers, steps, operations, components, parts, and/or combinations thereof disclosed in the specification. That is, in the specification, the terms "comprises," "comprising," "includes," "including," "containing," "has," "having", and other variations thereof do not preclude the presence or addition of one or more other features, integers, steps, operations, components, parts, and/or combinations thereof.

The terms including ordinal numbers such as "first," "second," and the like may be used to describe various components, but the components are not limited by the terms. These terms are used only to distinguish one component from another component.

When one component is described as being "coupled" or "connected" to another component, it should be understood that one component can be coupled or connected directly to another component, and an intervening component can also be present between the components. In contrast, when one component is described as being "coupled directly to" or "connected directly to" another component, it should be understood that no intervening component is present between the components.

When one component is described as being "disposed above" or "disposed below" another component, it should be understood that one component can be disposed directly on another component, and an intervening component can also be present between the components.

Unless otherwise defined, all terms used herein, including technical or scientific terms, have the same meaning as commonly understood by those skilled in the art to which the present invention pertains. The terms such as those defined in a commonly used dictionary should be interpreted as having meanings consistent with meanings in the context of related technologies and should not be interpreted as ideal or excessively formal meanings unless explicitly defined in the present application.

Hereinafter, an electrode lead aligning and masking device according to an embodiment of the present invention will be described.

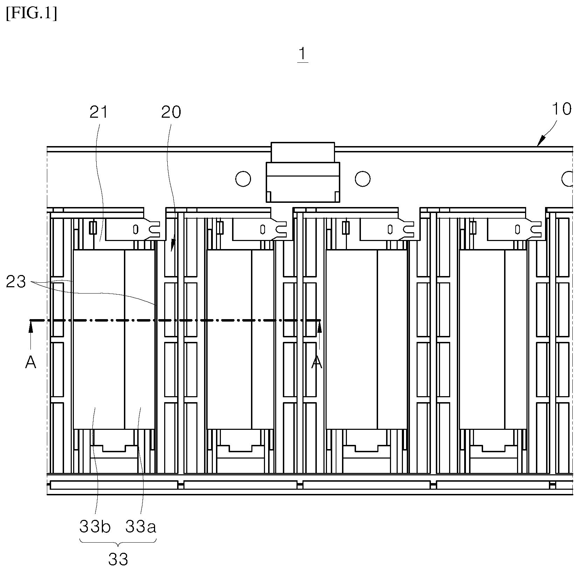

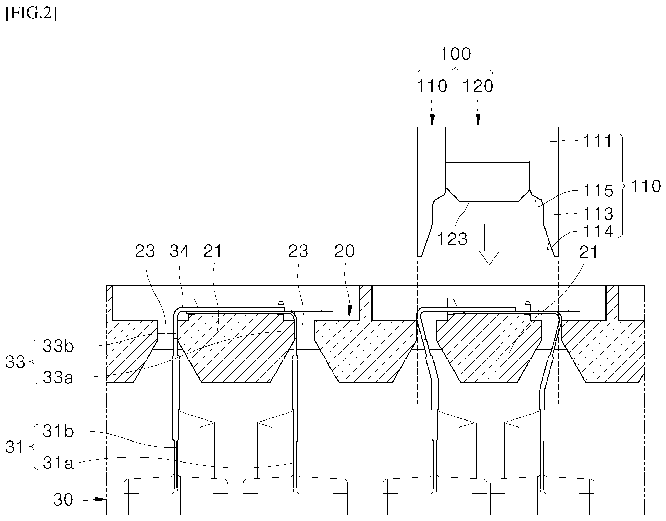

FIG. 1 is a plan view schematically illustrating a secondary battery module, and FIG. 2 is a cross-sectional view schematically illustrating a state in which an electrode lead aligning and masking device is disposed on an upper side of a bus bar in the secondary battery module.

Referring to FIGS. 1 and 2, in a secondary battery module 1, a plurality of battery cells 30 are stacked inside a case 10. An electrode tab 31 extends to protrude from each of the battery cells 30, and is welded to an electrode lead 33. A bus bar frame 20 is assembled to a battery cell stack (not shown). A plurality of bus bars 21 are arranged side by side in the bus bar frame 20. A slot 23 is formed between each of the plurality of bus bars 21 in the bus bar frame 20. The slot 23 may be formed with a width that is about 5 to 7 times a thickness of the electrode lead 33. When the bus bar frame 20 is assembled to the battery cell stack, a plurality of electrode leads 33 pass through the corresponding slots 23 and protrude vertically or nearly vertically outwardly from the bus bar frame 20.

In the battery cell stack, the electrode lead 33 is bent so as to come into close contact with the bus bar 21 using a bending tool (not shown) in a bending process. In each bus bar 21, a pair of electrode leads 33 are bent in a width direction of the bus bar 21 and overlap each other. When the operation of bending the electrode lead 33 on the bus bar 21 is completed, a welding process is performed. In the welding process, an electrode lead aligning and masking device 100 welds the bent electrode leads 33 to the bus bar 21 in a state in which the electrode leads 33 are aligned on the bus bar 21. This will be described in detail below.

The electrode lead aligning and masking device 100 not being part of the present invention is a device for aligning and masking the electrode leads 33 bent on the bus bar 21 of the secondary battery module 1 in the welding process of the electrode leads 33. Here, on the bus bar 21, the electrode leads 33 having the same polarity may be bent or the electrode leads 33 having opposite polarities may be bent. In addition, the electrode leads 33 having the same polarity may be bent on some bus bars 21, and the electrode leads 33 having opposite polarities may be bent on the remaining bus bars 21.

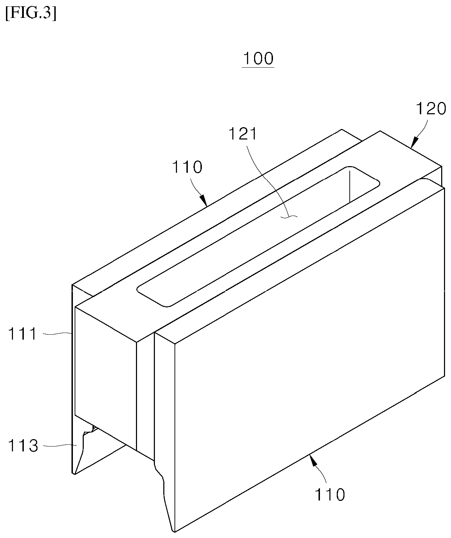

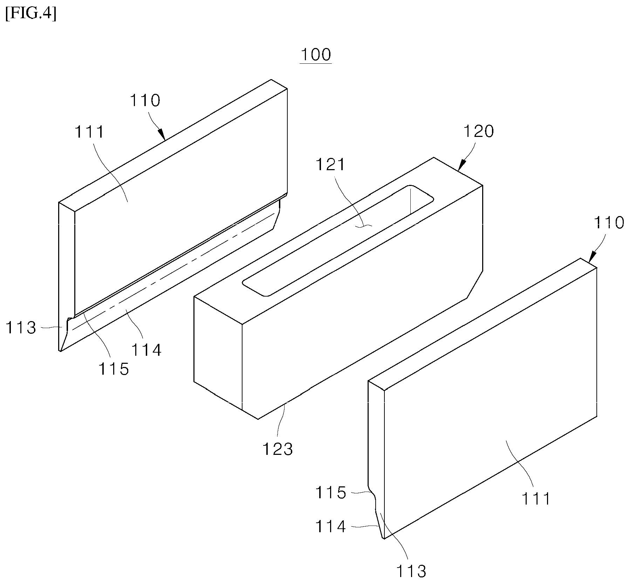

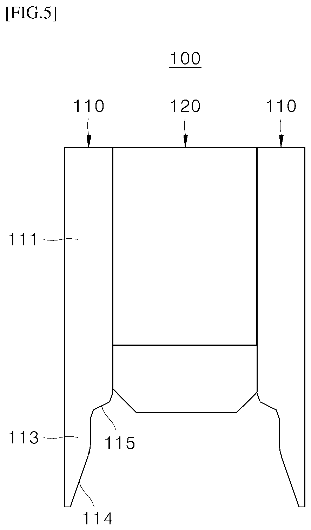

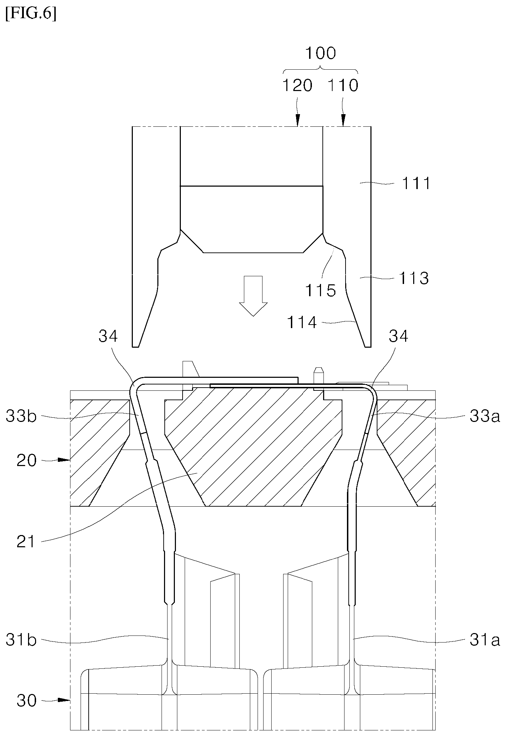

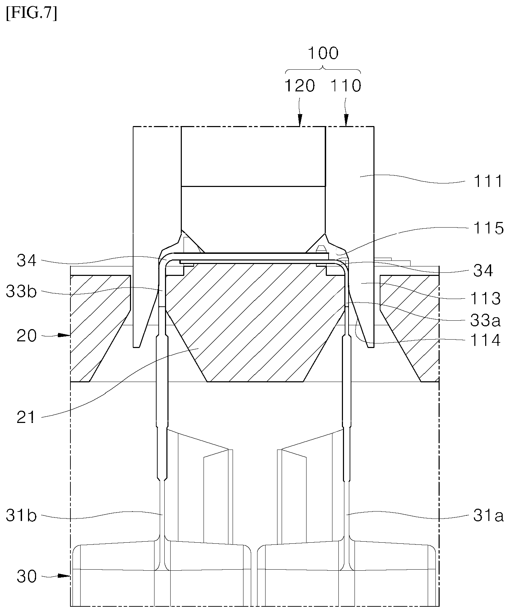

FIG. 3 is a perspective view schematically illustrating an electrode lead aligning and masking device not being part of the present invention, FIG. 4 is an exploded perspective view schematically illustrating the electrode lead aligning and masking device not being part of the present invention, FIG. 5 is a front view schematically illustrating the electrode lead aligning and masking device not being part of the present invention, FIG. 6 is a view schematically illustrating a state in which the electrode lead aligning and masking device not being part of the present invention is located on an upper side of an electrode lead, and FIG. 7 is a view schematically illustrating a state in which an alignment jig of the electrode lead aligning and masking device not being part of the present invention is inserted into a slot to align the electrode lead.

The electrode lead aligning and masking device according to the first embodiment of the present invention will be described.

Referring to FIGS. 3 to 7, an electrode lead aligning and masking device 100 not being part of the present invention includes a pair of aligning jigs 110 and a masking jig 120.

The pair of aligning jigs 110 are inserted into the slots 23 on both sides of the bus bar 21 and align positions of a pair of electrode leads 33. The pair of aligning jigs 110 gather the bent electrode leads 33 on both side surfaces of the bus bar 21 in the width direction while being inserted into the slots 23. Here, the pair of electrode leads 33 may be aligned to be in close contact with or slightly spaced apart from both side surfaces of the bus bar 21 in the width direction. In addition, when the pair of electrode leads 33 are bent on the bus bar 21, an end portion of one electrode lead 33 has a length so as to be spaced apart from a bent portion 34 of the other electrode lead 33 by a predetermined distance.

The masking jig 120 is coupled to the aligning jigs 110 and is formed to surround a welding portion of the electrode lead 33. The masking jig 120 shields a circumference of the welding portion so that sparks or spatters do not deviate from the welding portion when the electrode lead 33 is welded to the bus bar 21. Accordingly, it is possible to significantly reduce a welding defect rate by preventing spatters or sparks generated during welding from splashing to a surrounding structure.

As described above, since the pair of aligning jigs 110 align the positions of the bent electrode leads 33, and a welding tool (not shown) welds the electrode leads 33 in a state in which the masking jig 120 presses the bent electrode leads 33, the bent electrode leads 33 can be welded to a correct position of the bus bar 21. In addition, an actual welding length of the electrode lead 33 may be matched with a design welding length thereof. The welding length refers to a length at which the electrode lead is welded in parallel to a length of the bus bar 21 in the width direction. In addition, the electrode leads 33 may be prevented from spreading outward in the width direction of the bus bar 21. Accordingly, it is possible to prevent a bonding area and a bonding strength of the welding portion from being reduced and reduce a welding defect rate.

In addition, since the end portion of the bent electrode lead 33 does not overlap the bent portion 34 of the opposite electrode lead 33, which is bent to be rounded, it is possible to prevent an overlapping portion of the pair of electrode leads 33 from being locally lifted or prevent a gap from widening. Accordingly, the bonding strength of the welding portion can be increased.

In addition, since the welding length of the pair of electrode leads 33 in each bus bar 21 becomes uniform, the actual welding length is matched with a required design dimension, thereby reducing the welding defect rate.

The pair of aligning jigs 110 are coupled to both sides of the masking jig 120 in the width direction. At this time, the pair of aligning jigs 110 may be welded or adhered to both sides of the masking jig 120 in the width direction or coupled to the both sides by fastening members such as screws or rivets. Accordingly, the aligning jigs 110 and the masking jig 120 may be lifted and moved by one moving device (not shown) to align and weld the electrode leads 33.

The aligning jig 110 gathers the electrode lead 33 toward the bus bar 21 while being inserted into the slot 23 on an outer side of the electrode lead 33. Here, outer sides of the pair of aligning jigs 110 in a thickness direction may be in contact with or be spaced apart from outer surfaces of the slot 23. In addition, inner sides of the pair of aligning jigs 110 in the thickness direction may be in contact with outer side surfaces of the electrode leads 33. Accordingly, when the aligning jig 110 descends, the pair of electrode leads 33 may be aligned while being gathered toward the bus bar 21.

The aligning jig 110 includes an alignment body portion 111 and an alignment rib 113.

The alignment bodies 111 face both sides of the masking jig 120. The alignment bodies 111 may be fixed to both sides of the masking jig 120 in the width direction by welding or an adhesive, or may be fixed to both sides of the masking jig 120 in the width direction by fastening members such as screws or rivets.

The alignment rib 113 extends downward from the alignment body portion 111 and is formed to be thinner than a thickness of the alignment body portion 111. The alignment rib 113 aligns the electrode lead 33 while being inserted into the slot 23. The alignment rib 113 presses the outer side surfaces of the electrode lead 33 toward the bus bar 21 to bring the electrode lead 33 into close contact with the bus bar 21 or align the electrode lead 33 to be finely separated from the bus bar 21. Whether the electrode lead 33 is in contact with the bus bar 21 may be determined according to a thickness of the aligning jig.

An alignment taper portion 114 is formed on an inner side of the alignment rib 113 in the thickness direction to gather the electrode lead 33 toward the bus bar 21. In this case, a thickness of the alignment rib 113 becomes gradually smaller toward the lower side due to the alignment taper portion 114. Accordingly, a lower end portion of the alignment rib 113 is easily inserted between the outer side surface of the electrode lead 33 and an outer side surface of the slot 23, and as the alignment rib 113 descends, the electrode lead 33 may be aligned while being pressed toward the bus bar 21. In addition, , it is possible to prevent the alignment rib 113 or the electrode lead 33 from being damaged or broken due to the end portion of the alignment rib 113 caught on the bent portion 34 of the electrode lead 33 when the alignment rib 113 is inserted into the slot 23.

A stepped portion 115 may be formed on a lower side of the alignment body portion 111 to be spaced apart from the bent portion 34 of the electrode lead 33. Here, a pressing surface portion 123 of the masking jig 120 is disposed at a lower position than the stepped portion 115. The stepped portion 115 may be formed to be horizontal or slightly inclined with respect to the pressing surface portion 123. Accordingly, when the pressing surface portion 123 of the masking jig 120 presses the electrode lead 33, the bent portion 34 of the electrode lead 33 is spaced apart from the stepped portion 115 by a predetermined distance, thereby preventing the alignment body portion 111 from pressing the bent portion 34 of the electrode lead 33. Furthermore, the electrode lead 33 or the electrode tab 31 may be prevented from being bent or broken by a pressing force of the alignment body portion 111.

The aligning jig 110 is formed in the shape of a rectangular panel. A length of the aligning jig 110 may be formed to be slightly smaller than a length of the slot 23. In addition, the length of the aligning jig 110 may also be formed to be equal to or slightly larger than a length of the electrode lead 33. Of course, the aligning jig 110 may be formed in various shapes such as the shape of a sawtooth, the shape of a plurality of bars arranged in a row, and the like, as long as it is inserted into the slot 23 and aligns the electrode lead 33.

A welding space portion 121 passing through the masking jig 120 in a vertical direction is formed in the masking jig 120. The welding tool may pass through the welding space portion 121 and weld the bent electrode lead 33 to the bus bar 21. The welding tool may be a laser welding tool that welds the electrode leads 33 by irradiating a laser thereto, or a spot welding tool that welds the electrode leads 33 by applying an electric current thereto. Various welding types may be applied according to the type of material of each of the electrode lead 33 and the bus bar 21. As described above, since the welding tool enters the welding space portion 121 to weld the electrode lead 33, it is possible to prevent spatters or welding sparks from splashing around the electrode lead 33.

The masking jig 120 may be formed in the shape of a rectangular cylinder parallel to the bus bar 21 in the longitudinal direction. The welding space portion 121 is formed parallel to the bus bar 21 in the longitudinal direction. A width of the masking jig 120 may be formed smaller than a width of the bus bar 21. A width of the welding space portion 121 may be formed smaller than the width of the bus bar 21. A length of the welding space portion 121 may be formed to be slightly smaller than the length of the electrode lead 33. A cross section of the welding space portion 121 may be formed in a rectangular shape parallel to the bus bar 21 in the longitudinal direction. Since the masking jig 120 is formed in the shape of a rectangular cylinder, the overlapping portion of the electrode leads 33 may be welded in the longitudinal direction.

The masking jig 120 presses the bent electrode leads 33 to the bus bar 21. Accordingly, when the welding tool welds the electrode leads 33, the overlapping portion of the electrode leads 33 may be prevented from being lifted or spaced. Furthermore, it is possible to prevent the welding bonding strength of the overlapping portion of the electrode leads 33 from being degraded. In addition, a local temperature deviation of the electrode lead 33 due to the lifting or spacing of the electrode lead 33 is prevented from occurring, thereby preventing a welding defect.

The electrode lead aligning and masking device 100 not being part of the present invention may include a pair of aligning jigs 110 and one masking jig 120 to align a pair of electrode leads 33 to one bus bar 21. The electrode lead aligning and masking device 100 aligns and masks the electrode leads 33 on one bus bar 21 each time the electrode lead aligning and masking device 100 descends.

In addition, the electrode lead aligning and masking device 100 may be manufactured in a form in which four or more aligning jigs 110 and two or more masking jigs 120 are arranged to align a pair of electrode leads 33 to each of at least two or more bus bars 21. The electrode lead aligning and masking device 100 may simultaneously align the electrode leads 33 to two or more bus bars 21 each time the electrode lead aligning and masking device 100 descends.

Next, an electrode lead aligning and masking device according to the present invention will be described.

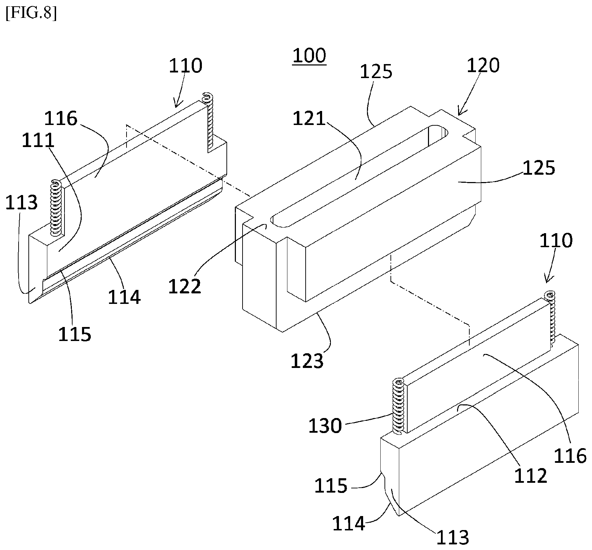

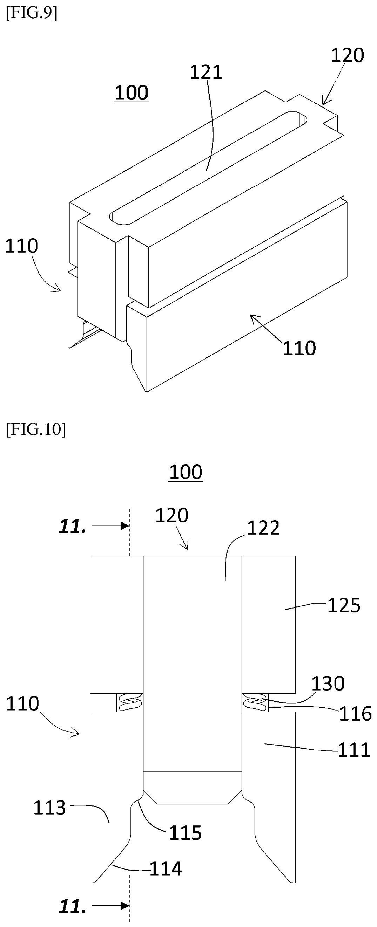

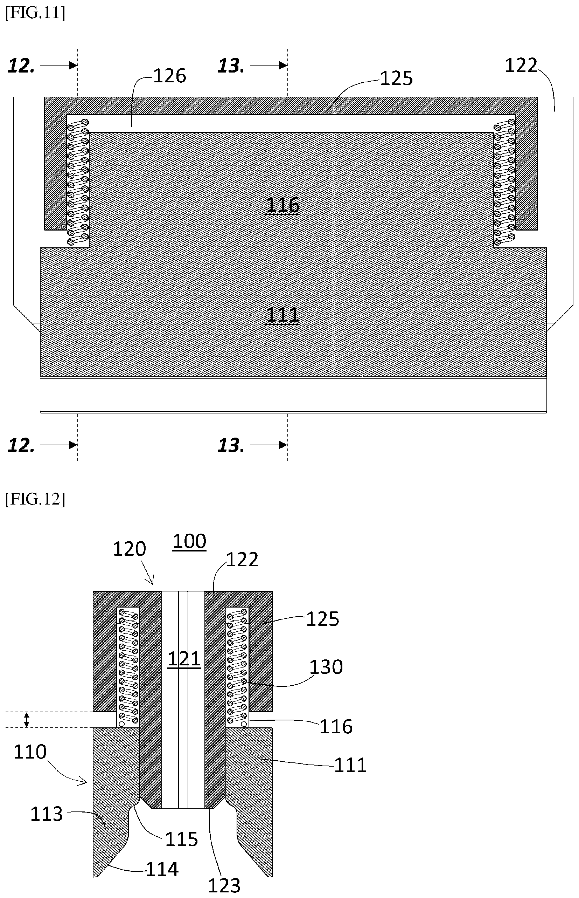

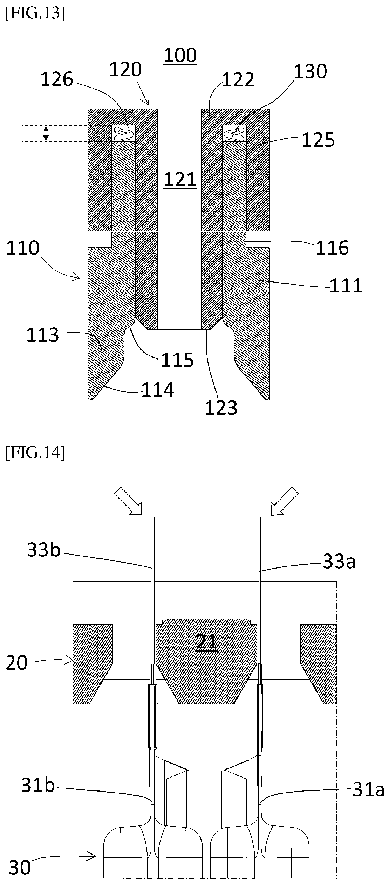

FIG. 8 is an exploded perspective view schematically illustrating an electrode lead aligning and masking device according to the present invention, FIG 9 is a perspective view schematically illustrating the electrode lead aligning and masking device according to the present invention, FIG. 10 is a front view schematically illustrating the electrode lead aligning and masking device according to the present invention, FIG. 11 is a cross-sectional view schematically illustrating a state in which the electrode lead aligning and masking device of FIG. 10 is cut along line 11-11, FIG. 12 is a cross-sectional view schematically illustrating a state in which the electrode lead aligning and masking device of FIG. 11 is cut along line 12-12 in the electrode lead, and FIG. 13 is a cross-sectional view schematically illustrating a state in which the electrode lead aligning and masking device of FIG. 11 is cut along line 13-13 in the electrode lead.

Referring to FIGS. 8 to 13, an electrode lead aligning and masking device 100 according to the present invention includes a pair of aligning jigs 110, a masking jig 120, and at least two elastic members 130.

The pair of aligning jigs 110 are inserted into the slots 23 on both sides of the bus bar 21 and align positions of a pair of electrode leads 33. The pair of aligning jigs 110 gather the bent electrode leads 33 on both side surfaces of the bus bar 21 in the width direction while being inserted into the slots 23. Here, the pair of electrode leads 33 may be aligned to be in close contact with or slightly spaced apart from both side surfaces of the bus bar 21 in the width direction. In addition, when the pair of electrode leads 33 are bent on the bus bar 21, an end portion of one electrode lead 33 may have a length so as to be spaced apart from a bent portion 34 of the other electrode lead 33 by a predetermined distance.

The masking jig 120 is disposed between the pair of aligning jigs 110 and is formed to surround a welding portion of the electrode lead 33. The aligning jigs 110 are movably coupled to the masking jig 120. The masking jig 120 shields a circumference of the welding portion so that sparks or spatters do not deviate from the welding portion when the electrode lead 33 is welded to the bus bar 21. Accordingly, it is possible to significantly reduce a welding defect rate by preventing spatters or sparks generated during welding from splashing to a surrounding structure.

At least two elastic members 130 are installed on both sides of the masking jig 120 to elastically support the pair of aligning jigs 110. The elastic member 130 may be a coil spring configured to connect the masking jig 120 and the aligning jig 110. The elastic member 130 may applied in various forms and in various positions, as long as it elastically support the aligning jig 110.

As described above, the aligning jig 110 is movably coupled to the masking jig 120 and is elastically supported by the elastic member 130. Accordingly, since the electrode leads 33 are aligned while the aligning jigs 110 move up and down, deformation of the electrode leads 33 may be minimized. In addition, since the impact of the aligning jig 110 and the electrode lead 33 is buffered at the moment when the aligning jig 110 presses the electrode lead 33, it is possible to prevent damage to the aligning jig 110 and the electrode lead 33. In addition, it is possible to prevent scratches from occurring on a surface of the electrode lead 33 and to significantly reduce the possibility of overheating and ignition of the electrode lead 33.

In addition, since the pair of aligning jigs 110 align the positions of the bent electrode leads 33, and a welding tool (not shown) welds the electrode leads 33 in a state in which the masking jig 120 presses the bent electrode leads 33, the bent electrode leads 33 can be welded to a correct position of the bus bar 21. In addition, an actual welding length of the electrode lead 33 can be matched with a design welding length thereof. The welding length refers to a length at which the electrode lead is welded in parallel to a length of the bus bar 21 in the width direction. In addition, the electrode leads 33 may be prevented from spreading outward in the width direction of the bus bar 21. Accordingly, it is possible to prevent a bonding area and a bonding strength of the welding portion from being reduced and reduce a welding defect rate.

In addition, since the end portion of the bent electrode lead 33 does not overlap the bent portion 34 of the opposite electrode lead 33, which is bent to be rounded, it is possible to prevent an overlapping portion of the pair of electrode leads 33 from being locally lifted or prevent a gap from widening. Accordingly, a bonding strength of the welding portion can be increased.

In addition, since the welding length of the pair of electrode leads 33 in each bus bar 21 becomes uniform, the actual welding length is matched with a required design dimension, thereby reducing the welding defect rate.

The masking jig 120 includes a masking body portion 122 and a sliding guide portion 125.

A welding space portion 121 passing through the masking body portion 122 in the vertical direction is formed in the masking body portion 122. The welding space portion 121 may be formed in the shape of a long hole parallel to the masking body portion 122 in the longitudinal direction. Accordingly, the welding tool may approach and weld the electrode lead 33 via the welding space portion 121.

The welding tool may be a laser welding tool that welds the electrode leads 33 by irradiating a laser thereto, or a spot welding tool that welds the electrode leads 33 by applying an electric current thereto. Various welding types may be applied according to the type of material of each of the electrode lead 33 and the bus bar 21. As described above, since the welding tool enters the welding space portion 121 to weld the electrode lead 33, it is possible to prevent spatters or welding sparks from splashing around the electrode lead 33.

The sliding guide portions 125 are disposed on both sides of the masking body portion 122. A sliding groove portion 126 is formed in the sliding guide portion 125 such that the aligning jig 110 is slidably coupled to the sliding guide portion 125. The sliding groove portion 126 is a space surrounded by a side surface of the masking body portion 122 and an inner side surface of the sliding guide portion 125. The sliding groove portion 126 is formed in the shape of a long hole along a longitudinal direction of the masking body portion 122. In addition, a lower side of the sliding groove portion 126 is open. The sliding guide portion 125 supports the aligning jig 110 so that the aligning jig 110 does not move.

The aligning jig 110 gathers the electrode lead 33 toward the bus bar 21 while being inserted into the slot 23 on an outer side of the electrode lead 33. Here, outer sides of the pair of aligning jigs 110 in a thickness direction may be in contact with or be spaced apart from outer side surfaces of the slots 23. In addition, inner sides of the pair of aligning jigs 110 in the thickness direction may be in contact with outer side surfaces of the electrode leads 33. Accordingly, when the aligning jig 110 descends, the pair of electrode leads 33 may be aligned while being gathered toward the bus bar 21.

The aligning jig 110 includes an alignment body portion 111, an alignment rib 113, and a slider 116. The aligning jig 110 may be entirely formed in the shape of a rectangular panel.

The alignment bodies 111 face both sides of the masking jig 120. An inner side surface of the alignment body portion 111 is formed in a flat plate shape so as to be in surface contact with a side surface of the masking jig 120 when the aligning jig 110 moves in the vertical direction.

The alignment rib 113 extends downward from the alignment body portion 111 and is formed to be thinner than a thickness of the alignment body portion 111. The alignment rib 113 align the electrode lead 33 by being inserted into the slot 23 between the bus bars 21. The alignment rib 113 may be formed to have the same length as or a slightly different length from the alignment body portion 111.

The slider 116 extends upward from the alignment body portion 111 and is slidably coupled to the sliding groove portion 126. The slider 116 may be formed in a plate shape so as to be inserted into the sliding groove portion 126. A length of the slider 116 may be formed to be slightly smaller than a length of the sliding groove portion 126.

A thickness of the slider 116 may be formed smaller than a thickness of the alignment body portion 111. Accordingly, a lower end portion of the slider 116 and an upper end portion of the alignment body portion 111 may be formed to be stepped. In addition, since the thickness of the slider 116 is formed to be small, a width of the sliding guide portion 125 and a width of the sliding groove portion 126 may be prevented from increasing unnecessarily.

An alignment taper portion 114 is formed on an inner side of the alignment rib 113 in the thickness direction to gather the electrode lead 33 toward the bus bar 21. In this case, a thickness of the alignment rib 113 becomes gradually smaller toward the lower side due to the alignment taper portion 114. Accordingly, a lower end portion of the alignment rib 113 is easily inserted between the outer side surface of the electrode lead 33 and an outer side surface of the slot 23, and as the alignment rib 113 descends, the electrode lead 33 may be aligned while being pressed toward the bus bar 21. In addition, it is possible to prevent the alignment rib 113 or the electrode lead 33 from being damaged or broken due to the end portion of the alignment rib 113 caught on the bent portion 34 of the electrode lead 33 when the alignment rib 113 is inserted into the slot 23.

A movement limiting portion 112 configured to limit a movement distance of the aligning jig 110 by being caught on a lower end portion of the sliding guide portion 125 is formed on an upper side of the alignment body portion 111. The movement limiting portion 112 may be a step formed at a boundary between the upper end portion of the alignment body portion 111 and the lower end portion of the slider 116. The movement limiting portion 112 may be formed in various structures on the alignment body portion 111 or the slider 116.

A stepped portion 115 may be formed on a lower side of the alignment body portion 111 to be spaced apart from the bent portion 34 of the electrode lead 33. Here, a pressing surface portion 123 of the masking jig 120 is disposed at a lower position than the stepped portion 115. The stepped portion 115 may be formed to be horizontal or slightly inclined with respect to the pressing surface portion 123. Accordingly, when the pressing surface portion 123 of the masking jig 120 presses the electrode lead 33, the bent portion 34 of the electrode lead 33 is spaced apart from the stepped portion 115 by a predetermined distance, thereby preventing the alignment body portion 111 from pressing the bent portion 34 of the electrode lead 33. Furthermore, the electrode lead 33 or the electrode tab 31 may be prevented from being bent or broken by a pressing force of the alignment body portion 111.

A length of the aligning jig 110 may be formed to be slightly smaller than a length of the slot 23. In addition, the length of the aligning jig 110 may also be formed to be equal to or slightly larger than a length of the electrode lead 33. Of course, the aligning jig 110 may be formed in various shapes such as the shape of a sawtooth, the shape of a plurality of bars arranged in a row, and the like, as long as it is inserted into the slot 23 and aligns the electrode lead 33.

The masking jig 120 may be formed in the shape of a rectangular cylinder parallel to the bus bar 21 in the longitudinal direction. A width of the masking jig 120 may be formed smaller than a width of the bus bar 21. A width of the welding space portion 121 may be formed smaller than the width of the bus bar 21. A length of the welding space portion 121 may be formed to be slightly smaller than the length of the electrode lead 33. A cross section of the welding space portion 121 may be formed in a rectangular shape parallel to the bus bar 21 in the longitudinal direction. Since the masking jig 120 is formed in the shape of a rectangular cylinder, the overlapping portion of the electrode leads 33 may be welded in the longitudinal direction.

The masking jig 120 presses the bent electrode leads 33 on the bus bar 21. Accordingly, when the welding tool welds the electrode leads 33, the overlapping portion of the electrode leads 33 may be prevented from being lifted or spaced. Furthermore, it is possible to prevent the welding bonding strength of the overlapping portion of the electrode leads 33 from being degraded. In addition, a local temperature deviation of the electrode lead 33 due to the lifting or spacing of the electrode lead 33 is prevented from occurring, thereby preventing a welding defect.

The elastic member 130 may be supported by the upper end portion of the alignment body portion 111 and an upper end portion of the sliding groove portion 126. The elastic members 130 may be disposed on both sides of the alignment body portion 111, respectively, in the longitudinal direction. Since the elastic members 130 are disposed on both sides of the alignment body portion 111 in the longitudinal direction, the aligning jig 110 may be finely inclined to one side in the longitudinal direction. Accordingly, even when the electrode lead 33 or the bus bar 21 is slightly inclined, the electrode lead 33 may be aligned as the aligning jig 110 is finely inclined to one side in the longitudinal direction.

The electrode lead aligning and masking device 100 according to the present invention may include a pair of aligning jigs 110 and one masking jig 120 to align a pair of electrode leads 33 to one bus bar 21. The electrode lead aligning and masking device 100 aligns and masks the electrode leads 33 on one bus bar 21 each time the electrode lead aligning and masking device 100 descends.

In addition, the electrode lead aligning and masking device 100 according to the present invention may be manufactured in a form in which four or more aligning jigs 110 and two or more masking jigs 120 are arranged to align a pair of electrode leads 33 to each of at least two or more bus bars 21. The electrode lead aligning and masking device 100 may simultaneously align the electrode leads 33 to two or more bus bars 21 each time the electrode lead aligning and masking device 100 descends.

An operation of the aligning and masking device according to the present invention configured as described above will be described.

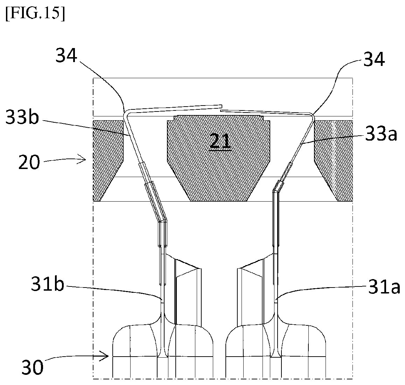

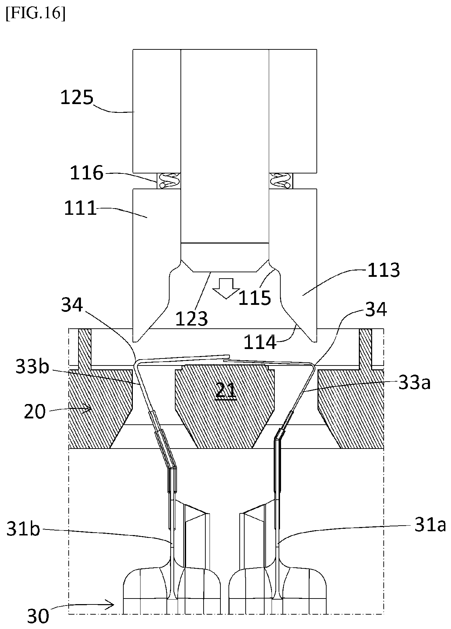

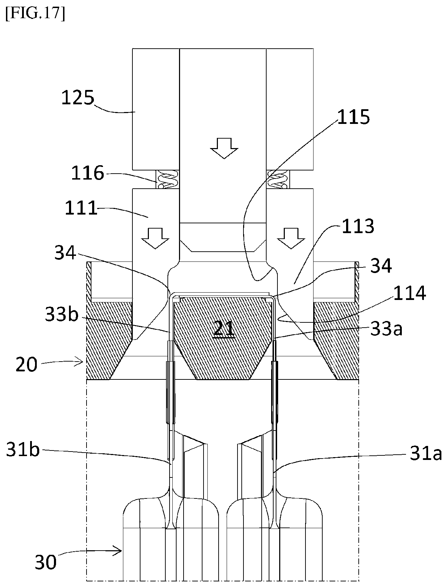

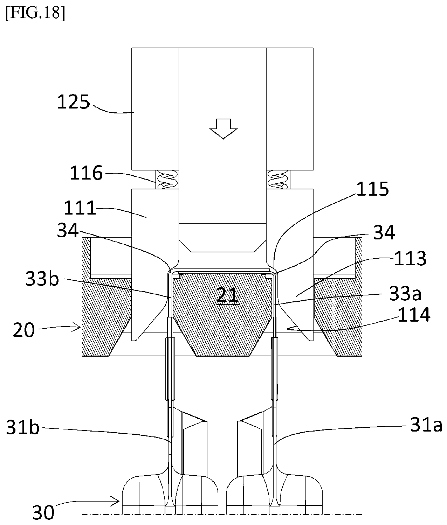

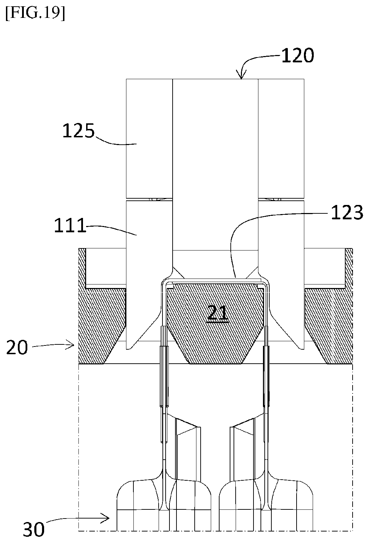

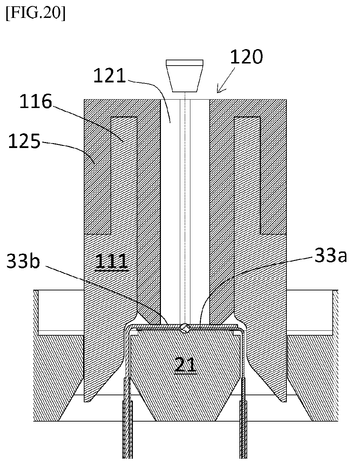

FIG. 14 is a cross-sectional view schematically illustrating a state in which the electrode lead of the battery cell is inserted into the slot of the bus bar in the secondary battery module, FIG. 15 is a cross-sectional view schematically illustrating a state in which the electrode lead of the battery cell is bent on the bus bar in the secondary battery module, FIG. 16 is a cross-sectional view schematically illustrating a state in which the aligning and masking device according to the present invention is located on an upper side of the bus bar, FIG. 17 is a cross-sectional view schematically illustrating a state in which the aligning jig of the aligning and masking device according to the present invention is inserted into the slot between the bus bars, FIG. 18 is a cross-sectional view schematically illustrating a state in which the stepped portion of the aligning jig the aligning and masking device according to the present invention presses the bent portion of the electrode lead, FIG. 19 is a cross-sectional view schematically illustrating a state in which the pressing surface portion of the masking jig of the aligning and masking device according to the present invention presses the electrode lead, and FIG. 20 is a view schematically illustrating a state in which the electrode lead is welded to the bus bar via the welding space portion of the masking jig.

Referring to FIGS. 14 to 20, the electrode leads 33 of the battery cell 30 are inserted into the slots 23 on both sides of the bus bar 21. Here, the electrode leads 33 may be vertically inserted on both sides of the bus bar 21.

A bending device (not shown) presses and bends the electrode lead 33 toward the bus bar 21. At this time, the pair of electrode leads 33 may be spread toward both sides of the bus bar 21 or may be spaced apart from each other on both side surfaces of the bus bar 21 (see FIG. 15).

The aligning and masking device 100 is moved to an upper side of the bus bar 21. At this time, the aligning jig 110 maintains the state of being most descended from the sliding guide portion 25 by an elastic force of the elastic member 130.

When the aligning and masking device 100 descends, the aligning jigs 110 are inserted into the slots 23 on both sides of the bus bar 21. At this time, when an impact is applied to the bent portion 34 of the electrode lead 33 by the alignment taper portion 114 of the aligning jig 110, the impact applied to the electrode lead 33 is buffered as the elastic member 130 is slightly contracted.

The alignment taper portion 114 of the aligning jig 110 gently descends while sliding along the bent portion 34 of the electrode lead 33. The electrode lead 33 is gathered toward the bus bar 21 as the alignment taper portion 114 presses an outer side of the electrode lead 33.

As the aligning jig 110 further descends, the electrode leads 33 are in close contact with both side surfaces of the bus bar 21 (see FIG. 17). Here, the electrode lead 33 may be lifted or spaced apart from an upper surface of the bus bar 21.

When the aligning jig 110 is completely inserted into the slot 23, the stepped portion 115 of the aligning jig 110 is in close contact with the bent portion 34 of the electrode lead 33 (FIG. 18). At this time, a pressing force of the aligning and masking device 100 is applied to the bent portion 34 of the electrode lead 33.

The masking jig 120 descends in a state in which the stepped portion 115 of the aligning jig 110 is caught on the bent portion 34 of the electrode lead 33. When the masking jig 120 descends in a state in which the aligning jig 110 is stopped, the elastic member 130 is contracted in the longitudinal direction. When the pressing surface portion 123 on a lower side of the masking jig 120 presses the electrode lead 33, the electrode lead 33 is brought into close contact with the upper surface of the bus bar 21. Subsequently, the welding tool welds the electrode lead 33 to the upper surface of the bus bar 21 via the welding space portion 121 of the masking jig 120 see (FIG. 20). Accordingly, the electrode lead 33 may be welded to the bus bar 21 in a state in which the electrode lead 33 is brought into close contact with both side surfaces and the upper surface of the bus bar 21.

While the present invention has been described above with reference to the accompanying drawings, the present invention is not limited to the drawings and the embodiments disclosed in the present specification, and it is apparent that the present invention may be variously changed by those skilled in the art without departing from the present invention, as defined by the appended claims.

## Claims

1. An electrode lead aligning and masking device (100) for aligning electrode leads (33) positioned on bus bars (21) in a welding process, the electrode lead aligning and masking device (100) comprising:
a pair of aligning jigs (110), each jig configured to be inserted into a slot (23) between the bus bars (21) to align the electrode leads (33) with the bus bars (21); and
a masking jig (120) disposed between the pair of aligning jigs (110) to surround welding portions of the electrode leads (33),
wherein the aligning jigs (110) are movably coupled to the masking jig (120), further comprising at least two elastic members (130), each elastic member (130) positioned on opposing sides of the masking jig (120) configured to provide elastic support to the pair of aligning jigs (110);
wherein
the masking jig (120) includes a masking body portion (122) having a welding space portion (121) passing therethrough in a vertical direction and a sliding guide portion (125) disposed on each side of the masking body portion (122), the sliding guide portion (125) including a sliding groove portion (126), the aligning jigs (110) being slidably coupled to the sliding groove portion (126).

2. The electrode lead aligning and masking device (100) of claim 1, wherein the pair of aligning jigs (110) are coupled to both sides of the masking jig (120) along a width direction of the masking jig.

3. The electrode lead aligning and masking device (100) of claim 1, wherein the aligning jig (110) is configured to direct the electrode leads (33) towards the bus bar (21) upon insertion of the electrode leads (33) into the slot (23).

4. The electrode lead aligning and masking device (100) of claim 3, wherein each aligning jig (110) includes an alignment body portion (111) adjacent to each side of the masking jig (120) and an alignment rib (113) extending from the alignment body portion (111), the alignment rib (113) being thinner than a thickness of the alignment body portion (111) and configured to align the electrode lead (33) during insertion into the slot (23).

5. The electrode lead aligning and masking device (100) of claim 4, further including an alignment taper portion (114) on an inner side of the alignment rib (113) in a thickness direction to guide the electrode lead (33) towards the bus bar (21).

6. The electrode lead aligning and masking device (100) of claim 5, wherein the alignment body portion (111) includes a stepped portion (115) on a lower side thereof, the stepped portion (115) being spaced apart from a bent portion (34) of the electrode lead (33), a pressing surface portion (123) of the masking jig (120) being positioned below the stepped portion (115).

7. The electrode lead aligning and masking device (100) of claim 1, wherein the aligning jig (120) is a rectangular panel.

8. The electrode lead aligning and masking device (100) of claim 1, wherein the aligning jig (110) includes an alignment body portion (111), and alignment rib (113) and a slider (116), the alignment body portion (111) being configured to face each side of the masking jig (120), the alignment rib (113) extending downward from the alignment body portion (111), the alignment rib (113) having a thickness less than a thickness of the alignment body portion (111), the alignment rib (113) being configured to align the electrode lead (33) when inserted into the slot (23), the slider (116) extending upward from the alignment body portion (111) and configured to be slidably coupled to the sliding groove portion (126).

9. The electrode lead aligning and masking device (100) of claim 8, wherein a thickness of the slider (116) is less than a thickness of the alignment body portion (111).

10. The electrode lead aligning and masking device (100) of claim 8, further including a movement limiting portion (112) on an upper side of the alignment body, the movement limiting portion (112) being configured to limit movement of the aligning jig (110) by engaging a lower end portion of the sliding guide portion (125).

11. The electrode lead aligning and masking device (100) of claim 8, wherein the elastic member (130) is supported by an upper end portion of the alignment body portion (111) and an upper end portion of the sliding groove portion (126).

12. The electrode lead aligning and masking device (100) of claim 11, wherein the elastic member (130) is disposed on both sides of the alignment body portion (111) in a longitudinal direction.

13. The electrode lead aligning and masking device (100) of claim 8, wherein the alignment body includes a stepped portion (115) on a lower side thereof, the stepped portion (115) being spaced apart from a bent portion (34) of the electrode lead (33), a pressing surface portion (123) of the masking jig (120) being positioned below the stepped portion (115).

## Patentansprüche

1. Vorrichtung zum Ausrichten und Maskieren von Elektrodenleitungen (100) zum Ausrichten von Elektrodenleitungen (33), welche an Sammelschienen (21) in einem Schweißprozess positioniert sind, wobei die Vorrichtung zum Ausrichten und Maskieren von Elektrodenleitungen (100) umfasst:
ein Paar von Ausrichtungswerkzeugen (110), wobei jedes Werkzeug dazu eingerichtet ist, in eine Ausnehmung (23) zwischen den Sammelschienen (21) eingesetzt zu sein, um die Elektrodenleitungen (33) mit den Sammelschienen (21) auszurichten; und
ein Maskierungswerkzeug (120), welches zwischen dem Paar von Ausrichtungswerkzeugen (110) angeordnet ist, um Schweißabschnitte der Elektrodenleitungen (33) zu umgeben,
wobei die Ausrichtungswerkzeuge (110) bewegbar mit dem Maskierungswerkzeug (120) gekoppelt sind, ferner umfassend wenigstens zwei elastische Elemente (130), wobei jedes elastische Element (130),
welches an entgegengesetzten Seiten des Maskierungswerkzeugs (120) positioniert ist, dazu eingerichtet ist, ein elastisches Tragen für das Paar von Ausrichtungswerkzeugen (110) bereitzustellen;
wobei das Maskierungswerkzeug (120) einen Maskierungskörper-Abschnitt (122) umfasst, welcher einen Schweißraum-Abschnitt (121), welcher in einer vertikalen Richtung dahindurch verläuft, und einen Gleitführung-Abschnitt (125) aufweist, welcher an jeder Seite des Maskierungskörper-Abschnitts (122) angeordnet ist, wobei der Gleitführung-Abschnitt (125) einen Gleitnut-Abschnitt (126) umfasst, wobei die Ausrichtungswerkzeuge (110) gleitbar mit dem Gleitnut-Abschnitt (126) gekoppelt sind.

2. Vorrichtung zum Ausrichten und Maskieren von Elektrodenleitungen (100) nach Anspruch 1, wobei das Paar von Ausrichtungswerkzeugen (110) mit beiden Seiten des Maskierungswerkzeugs (120) entlang einer Breitenrichtung des Maskierungswerkzeugs gekoppelt sind.

3. Vorrichtung zum Ausrichten und Maskieren von Elektrodenleitungen (100) nach Anspruch 1, wobei das Ausrichtungswerkzeug (110) dazu eingerichtet ist, die Elektrodenleitungen (33) in Richtung der Sammelschiene (21) auf ein Einsetzen der Elektrodenleitungen (33) in die Ausnehmung (23) hin zu richten.

4. Vorrichtung zum Ausrichten und Maskieren von Elektrodenleitungen (100) nach Anspruch 3, wobei jedes Ausrichtungswerkzeug (110) einen Ausrichtungskörper-Abschnitt (111) benachbart zu jeder Seite des Maskierungswerkzeugs (120) und eine Ausrichtungsrippe (113) umfasst, welche sich von dem Ausrichtungskörper-Abschnitt (111) erstreckt, wobei die Ausrichtungsrippe (113) dünner als eine Dicke des Ausrichtungskörper-Abschnitts (111) ist und dazu eingerichtet ist, die Elektrodenleitung (33) während eines Einsetzens in die Ausnehmung (23) auszurichten.

5. Vorrichtung zum Ausrichten und Maskieren von Elektrodenleitungen (100) nach Anspruch 4, ferner umfassend einen Ausrichtungsverjüngung-Abschnitt (114) an einer Innenseite der Ausrichtungsrippe (113) in einer Dickenrichtung zum Führen der Elektrodenleitung (33) in Richtung der Sammelschiene (21).

6. Vorrichtung zum Ausrichten und Maskieren von Elektrodenleitungen (100) nach Anspruch 5, wobei der Ausrichtungskörper-Abschnitt (111) einen gestuften Abschnitt (115) an einer unteren Seite davon umfasst, wobei de gestufte Abschnitt (115) von einem gebogenen Abschnitt (34) der Elektrodenleitung (33) beabstandet ist, wobei ein Pressflächen-Abschnitt (123) des Maskierungswerkzeugs (120) unterhalb des gestuften Abschnitts (115) positioniert ist.

7. Vorrichtung zum Ausrichten und Maskieren von Elektrodenleitungen (100) nach Anspruch 1, wobei das Ausrichtungswerkzeug (120) ein rechteckiges Paneel ist.

8. Vorrichtung zum Ausrichten und Maskieren von Elektrodenleitungen (100) nach Anspruch 1, wobei das Ausrichtungswerkzeug (110) einen Ausrichtungskörper-Abschnitt (111), eine Ausrichtungsrippe (113) und ein Gleitelement (116) umfasst, wobei der Ausrichtungskörper-Abschnitt (111) dazu eingerichtet ist, zu jeder Seite des Maskierungswerkzeugs (120) zu weisen, wobei sich die Ausrichtungsrippe (113) nach unten von dem Ausrichtungskörper-Abschnitt (111) erstreckt, wobei die Ausrichtungsrippe (113) eine Dicke aufweist, welche geringer als eine Dicke des Ausrichtungskörper-Abschnitts (111) ist, wobei die Ausrichtungsrippe (113) dazu eingerichtet ist, die Elektrodenleitung (33) auszurichten, wenn sie in die Ausnehmung (23) eingesetzt ist, wobei sich das Gleitelement (116) nach oben von dem Ausrichtungskörper-Abschnitt (111) erstreckt und dazu eingerichtet ist, gleitbar mit dem Gleitnut-Abschnitt (126) gekoppelt zu sein.

9. Vorrichtung zum Ausrichten und Maskieren von Elektrodenleitungen (100) nach Anspruch 8, wobei eine Dicke des Gleitelements (116) geringer als eine Dicke des Ausrichtungskörper-Abschnitts (111) ist.

10. Vorrichtung zum Ausrichten und Maskieren von Elektrodenleitungen (100) nach Anspruch 8, ferner umfassend einen Bewegungsbegrenzung-Abschnitt (112) an einer oberen Seite des Ausrichtungskörpers, wobei der Bewegungsbegrenzung-Abschnitt (112) dazu eingerichtet ist, eine Bewegung des Ausrichtungswerkzeugs (110) durch Eingreifen mit einem unteren Endabschnitt des Gleitführung-Abschnitts (125) zu begrenzen.

11. Vorrichtung zum Ausrichten und Maskieren von Elektrodenleitungen (100) nach Anspruch 8, wobei das elastische Element (130) durch einen oberen Endabschnitt des Ausrichtungskörper-Abschnitts (111) und einen oberen Endabschnitt des Gleitnut-Abschnitts (126) getragen ist.

12. Vorrichtung zum Ausrichten und Maskieren von Elektrodenleitungen (100) nach Anspruch 11, wobei das elastische Element (130) an beiden Seiten des Ausrichtungskörper-Abschnitts (111) in einer longitudinalen Richtung angeordnet ist.

13. Vorrichtung zum Ausrichten und Maskieren von Elektrodenleitungen (100) nach Anspruch 8, wobei der Ausrichtungskörper einen gestuften Abschnitt (115) an einer unteren Seite davon umfasst, wobei der gestufte Abschnitt (115) von einem gebogenen Abschnitt (34) der Elektrodenleitung (33) beabstandet ist, wobei ein Pressflächen-Abschnitt (123) des Maskierungswerkzeugs (120) unterhalb des gestuften Abschnitts (115) positioniert ist.

## Revendications

1. Dispositif d'alignement et de masquage de fils d'électrode (100) pour aligner des fils d'électrode (33) positionnés sur des barres omnibus (21) dans un procédé de soudage, le dispositif d'alignement et de masquage de fils d'électrode (100) comprenant :
une paire de gabarits d'alignement (110), chaque gabarit étant configuré pour être inséré dans une fente (23) entre les barres omnibus (21) pour aligner les fils d'électrode (33) sur les barres omnibus (21) ; et
un gabarit de masquage (120) disposé entre la paire de gabarits d'alignement (110) pour entourer des portions de soudage des fils d'électrode (33),
dans lequel les gabarits d'alignement (110) sont accouplés de manière mobile au gabarit de masquage (120), comprenant en outre au moins deux éléments élastiques (130), chaque élément élastique (130) positionné sur des côtés opposés du gabarit de masquage (120) étant configuré pour fournir un support élastique à la paire de gabarits d'alignement (110) ;
dans lequel le gabarit de masquage (120) comprend une portion corps de masquage (122) ayant une portion espace de soudage (121) qui traverse celle-ci dans une direction verticale et une portion guide de coulissement (125) disposée sur chaque côté de la portion corps de masquage (122), la portion guide de coulissement (125) comprenant une portion rainure de coulissement (126), les gabarits d'alignement (110) étant accouplés de manière coulissante à la portion rainure de coulissement (126).

2. Dispositif d'alignement et de masquage de fils d'électrode (100) selon la revendication 1, dans lequel la paire de gabarits d'alignement (110) est accouplée aux deux côtés du gabarit de masquage (120) le long d'une direction de largeur du gabarit de masquage.

3. Dispositif d'alignement et de masquage de fils d'électrode (100) selon la revendication 1, dans lequel le gabarit d'alignement (110) est configuré pour diriger les fils d'électrode (33) vers la barre omnibus (21) lors de l'insertion des fils d'électrode (33) dans la fente (23).

4. Dispositif d'alignement et de masquage de fils d'électrode (100) selon la revendication 3, dans lequel chaque gabarit d'alignement (110) comprend une portion corps d'alignement (111) adjacente à chaque côté du gabarit de masquage (120) et une nervure d'alignement (113) s'étendant à partir de la portion corps d'alignement (111), la nervure d'alignement (113) étant plus fine qu'une épaisseur de la portion corps d'alignement (111) et configurée pour aligner le fil d'électrode (33) durant l'insertion dans la fente (23).

5. Dispositif d'alignement et de masquage de fils d'électrode (100) selon la revendication 4, comprenant en outre une portion effilée d'alignement (114) sur un côté intérieur de la nervure d'alignement (113) dans une direction d'épaisseur pour guider le fil d'électrode (33) vers la barre omnibus (21).

6. Dispositif d'alignement et de masquage de fils d'électrode (100) selon la revendication 5, dans lequel la portion corps d'alignement (111) comprend une portion étagée (115) sur un côté inférieur de celle-ci, la portion étagée (115) étant espacée d'une portion courbée (34) du fil d'électrode (33), une portion surface de pression (123) du gabarit de masquage (120) étant positionnée sous la portion étagée (115).

7. Dispositif d'alignement et de masquage de fils d'électrode (100) selon la revendication 1, dans lequel le gabarit d'alignement (120) est un panneau rectangulaire.

8. Dispositif d'alignement et de masquage de fils d'électrode (100) selon la revendication 1, dans lequel le gabarit d'alignement (110) comprend une portion corps d'alignement (111), et une nervure d'alignement (113) et un coulisseau (116), la portion corps d'alignement (111) étant configurée pour faire face à chaque côté du gabarit de masquage (120), la nervure d'alignement (113) s'étendant vers le bas à partir de la portion corps d'alignement (111), la nervure d'alignement (113) ayant une épaisseur moins importante qu'une épaisseur de la portion corps d'alignement (111), la nervure d'alignement (113) étant configurée pour aligner le fil d'électrode (33) lorsqu'il est inséré dans la fente (23), le coulisseau (116) s'étendant vers le haut à partir de la portion corps d'alignement (111) et étant configuré pour être accouplé de manière coulissante à la portion rainure de coulissement (126).

9. Dispositif d'alignement et de masquage de fils d'électrode (100) selon la revendication 8, dans lequel une épaisseur du coulisseau (116) est moins importante qu'une épaisseur de la portion corps d'alignement (111).

10. Dispositif d'alignement et de masquage de fils d'électrode (100) selon la revendication 8, comprenant en outre une portion de limitation de mouvement (112) sur un côté supérieur du corps d'alignement, la portion de limitation de mouvement (112) étant configurée pour limiter un mouvement du gabarit d'alignement (110) en entrant en prise avec une portion d'extrémité inférieure de la portion guide de coulissement (125).

11. Dispositif d'alignement et de masquage de fils d'électrode (100) selon la revendication 8, dans lequel l'élément élastique (130) est supporté par une portion d'extrémité supérieure de la portion corps d'alignement (111) et une portion d'extrémité supérieure de la portion rainure de coulissement (126).

12. Dispositif d'alignement et de masquage de fils d'électrode (100) selon la revendication 11, dans lequel l'élément élastique (130) est disposé sur les deux côtés de la portion corps d'alignement (111) dans une direction longitudinale.

13. Dispositif d'alignement et de masquage de fils d'électrode (100) selon la revendication 8, dans lequel le corps d'alignement comprend une portion étagée (115) sur un côté inférieur de celui-ci, la portion étagée (115) étant espacée d'une portion courbée (34) du fil d'électrode (33), une portion surface de pression (123) du gabarit de masquage (120) étant positionnée sous la portion étagée (115).
